# EUROPEAN PATENT SPECIFICATION

(11) **EP 4 400 734 B1**
(45) Date of publication and mention of the grant of the patent: **27.08.2025**
(21) Application number: 23220697.9
(22) Date of filing: 29.12.2023
(51) Int. Cl.: F16C 17/06, F16C 35/02

(54) **FASTENING APPARATUS AND GEARBOX**
BEFESTIGUNGSVORRICHTUNG UND GETRIEBE
APPAREIL DE FIXATION ET BOÎTE DE VITESSES

(30) Priority: 13.01.2023 CN 202310040728
(43) Date of publication of application: 17.07.2024
(73) Proprietor: Nanjing High-Speed Gear Manufacturing Co., Ltd., Nanjing, Jiangsu 211100 (CN)
(72) Inventor: LUO, Haifeng, NANJING, 211100 (CN); XIONG, Yongqiang, NANJING, 211100 (CN); DING, Wenxiang, NANJING, 211100 (CN); SUN, Zhongkui, NANJING, 211100 (CN); LI, Hongjian, NANJING, 211100 (CN); ZHANG, Hechao, NANJING, 211100 (CN)
(74) Representative: Cabinet Beaumont

(56) References cited:
- WO-A1-2010/022778
- CN-U- 212 509 218
- GB-A- 201 459

## Description

### TECHNICAL FIELD

The present disclosure relates to the field of gearbox technology and, in particular, to a gearbox.

### BACKGROUND

A thrust pad is designed to guarantee the formation of an axial gap between static and dynamic components without direct contact, to reduce surface abrasion, and to prolong service life. In a wind power sliding bearing gearbox, a planet-gear axial thrust pad is usually mounted between a planet gear and a planet carrier. The thrust pad is secured on the planet carrier through a bolt.

During the operation process of the wind power gearbox, temperatures of components inside the gearbox, such as the planet gear, a rotating stand, and the thrust pad, fluctuate greatly. At an ambient temperature of 20 °C, the thrust pad is pre-tightened through the bolt. During operation, the internal temperature of the gearbox rises. Because the coefficient of thermal expansion of the material of the thrust pad is greater than the coefficient of thermal expansion of the material of the bolt, the thrust pad expands in the radial direction. The connection stiffness between the thrust pad and the bolt decreases. The pre-tightening force of the bolt decreases. The expansion of the thrust pad in the axial direction and the clamping force of the bolt lead to the plastic deformation of the thrust pad. When the internal temperature of the gearbox decreases again, the thrust pad cannot rebound to its original size in the axial direction, and the pre-tightening force of the bolt also decreases.

Under the alternate fluctuation of temperature rise and fall, the pre-tightening force of the bolt decreases by 20% to 30%. After a period of use, the planet-gear thrust pad is no longer firmly attached to the planet carrier, thereby resulting in the failure of the gearbox.

Further relevant technologies are also known from CN212509218U (CNNC FUJIAN FUQING NUCLEAR POWER CO LTD) 9 February 2021 (2021-02-09) which relates to elastic support of thrust bearing, WO2010/022778A1 (MAAG GEAR AG [CH]; RITTLER STEFAN [CH]) 4 March 2010 (2010-03-04) which relates to axial plain bearing and bearing segment for the same, GB201459A (CHARLES WILLIAM ALEXANDER TAYL) 2 August 1923 (1923-08-02) which relates to improvements in or relating to bearings.

### SUMMARY

The present disclosure provides a gearbox, which at least solves the problem of the mounting of the bolt, which is easy to loosen. In the case where the thrust pad has little to no plastic deformation, it guarantees that the tightening torque of a bolt that can be borne by the thrust pad is increased and that the pre-tightening force of the bolt is compensated for. Therefore, a shortcoming that the mounting of the bolt is easy to loosen is overcome. The thrust pad is fully secured on a carrying member, avoiding the failure of the gearbox.

The above problem is solved by a gearbox according to claim 1. Further improvements are provided in the dependent claims.

Also provided is a gearbox. The gearbox includes a thrust pad, a carrying member, and the preceding fastening apparatus of a thrust pad. The fastening apparatus of a thrust pad is configured to connect the thrust pad to the carrying member. The thrust pad is provided with a first recess and a communication hole communicating with the first recess, the carrying member is provided with a threaded hole, an aperture of the communication hole is greater than an aperture of the threaded hole, the fastening apparatus comprises a bolt and a connection structure, an end cap of the bolt is disposed in the first recess, a screw of the bolt passes through the connection structure and is threaded into the threaded hole, and the connection structure is able to be clamped between the end cap and the carrying member. The connection structure comprises a flange pad and a bushing body, the flange pad is disposed in the first recess, the bushing body is disposed in the communication hole, the flange pad is clamped between the end cap and a bottom of the first recess, and a reserved gap A is formed between the bushing body and one of the carrying member or the flange pad.

In some possible embodiments, the flange pad and the bushing body are integrally structured, and the reserved gap A is formed between the bushing body and the carrying member, or the flange pad and the bushing body are separably structured, and the reserved gap A is formed between the bushing body and one of the carrying member or the flange pad.

In some possible embodiments, when the reserved gap is formed between the bushing body and the flange pad, one end of the bushing body abuts against the carrying member, and the reserved gap A is formed between another end of the bushing body and the flange pad.

According to the invention, the thrust pad further comprises a second recess, the first recess and the second recess communicate with two sides of the communication hole respectively, an area of a bottom of the first recess and an area of a bottom of the second recess are each greater than an opening area of the communication hole, and an opening of the second recess faces the carrying member.

In some possible embodiments, the connection structure and the bolt are integrally structured, the connection structure is connected to an end of the end cap facing the screw, the end cap abuts against the bottom of the first recess, the connection structure is disposed in the communication hole, and the reserved gap A is formed between the carrying member and an end of the connection structure facing away from the end cap.

In some possible embodiments, the size of the reserved gap A is greater than or equal to 0.

### BRIEF DESCRIPTION OF DRAWINGS

FIG. 1 is a schematic showing a partial structure of a gearbox not part of the invention.
FIG. 2 is a schematic showing a fastening apparatus of a thrust pad not part of the invention.
FIG. 3 is a schematic showing a fastening apparatus of a thrust pad according to embodiment two of the present disclosure.
FIG. 4 is a schematic showing a fastening apparatus of a thrust pad not part of the invention.
FIG. 5 is a schematic showing a fastening apparatus of a thrust pad according to embodiment four of the present disclosure.
FIG. 6 is a schematic showing a fastening apparatus of a thrust pad not part of the invention.
FIG. 7 is a schematic showing a fastening apparatus of a thrust not part of the invention.
FIG. 8 is a schematic showing a fastening apparatus of a thrust pad not part of the invention.

### Reference list

- 100: thrust pad
- 101: first recess
- 102: communication hole
- 103: second recess
- 104: annular cantilever structure
- 200: carrying member
- 201: threaded hole
- 300: fastening apparatus
- 1: bolt
- 11: end cap
- 12: screw
- 13: shoulder
- 2: flange pad
- 3: bushing body
- A: reserved gap

### DETAILED DESCRIPTION

The technical solutions in embodiments of the present disclosure are further described in detail hereinafter in conjunction with the drawings. Apparently, the embodiments described below are part, not all, of embodiments of the present disclosure.

In the description of the present disclosure, unless otherwise expressly specified and limited, the term "connected to each other", "connected" or "secured" is to be construed in a broad sense, for example, as securely connected, detachably connected or integrated; mechanically connected or electrically connected; directly connected to each other or indirectly connected to each other via an intermediary; or internal connection between two components or interaction relations between two components. For those of ordinary skill in the art, specific meanings of the preceding terms in the present disclosure may be construed based on specific situations.

In the present disclosure, unless otherwise expressly specified and limited, when a first feature is described as "above" or "below" a second feature, the first feature and the second feature may be in direct contact or be in contact via another feature between the two features. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

### Embodiment one , not part of the invention

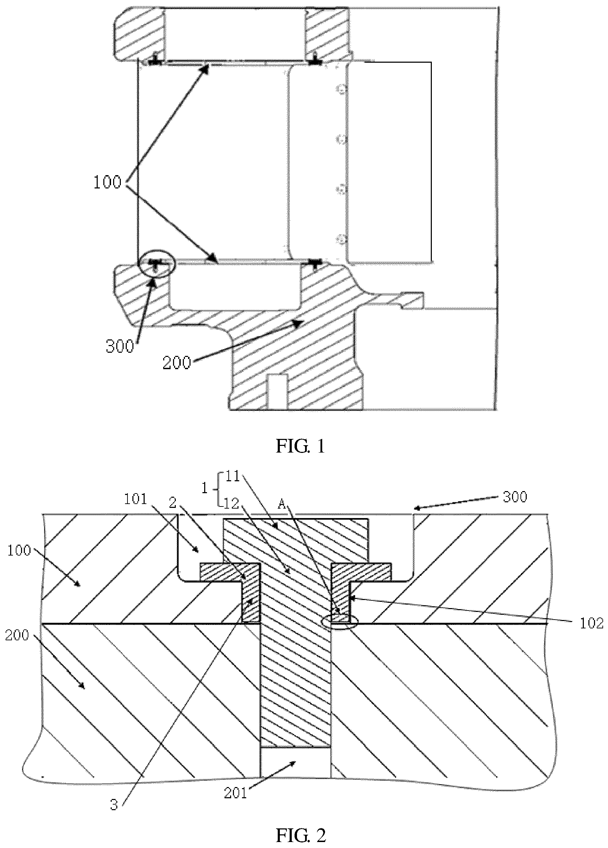

This embodiment provides a gearbox. As shown in FIG. 1, the gearbox includes a thrust pad 100, a carrying member 200, and a fastening apparatus of the thrust pad. The fastening apparatus 300 of a thrust pad is configured to connect the thrust pad 100 to the carrying member 200. The carrying member 200 may be a rotating stand. The carrying member 200 may be set according to needs and is not limited. This embodiment provides a fastening apparatus of a thrust pad. As shown in FIGS. 1 and 2, the thrust pad 100 is provided with a first recess 101 and a communication hole 102 communicating with the first recess 101. The carrying member 200 is provided with a threaded hole 201. The aperture of the communication hole 102 is greater than the aperture of the threaded hole 201. The fastening apparatus 300 includes a bolt 1 and a connection structure. An end cap 11 of the bolt 1 is disposed in the first recess 101. A screw 12 of the bolt 1 passes through the connection structure and is threaded into the threaded hole 201. The connection structure is able to be clamped between the end cap 11 and the carrying member 200.

The carrying member 200 is provided with the threaded hole 201 to be connected to the bolt 1 in a threaded manner so as to mount and carry the thrust pad 100. The bolt 1 presses and secures the thrust pad 100 on the carrying member 200 through the connection structure. The connection structure is used for bearing the tightening torque of the bolt 1 directly, preventing the thrust pad 100 from directly bearing the full tightening torque of the bolt 1. Therefore, it guarantees that the thrust pad 100 has little to no plastic deformation, preventing the thrust pad 100 from being crushed, improving the tightening torque of the bolt 1 that can be borne by the thrust pad 100, and compensating for the pre-tightening force loss of the bolt 1. The arrangement of the connection structure increases the function area of the bolt 1. Therefore, a greater pre-tightening force of the bolt 1 can be applied, thereby enabling various components that are connected to each other to be sufficiently stable and firm without looseness, overcoming the shortcoming that the existing mounting of the bolt 1 is easy to loosen. The thrust pad 100 is fully secured on the carrying member 200, avoiding the failure of the gearbox.

The carrying member 200 may be a planet carrier or a gear. The thrust pad 100 is disposed between the planet carrier and the gear. The thrust pad 100 is connected to one of the planet carriers or the gear through the fastening apparatus of a thrust pad.

In an embodiment, the coefficient of thermal expansion of the thrust pad 100 may be the same as, greater than, or less than the coefficient of thermal expansion of the material of the bolt 1. The material of the thrust pad 100 is not limited, improving the applicability of the fastening apparatus 300.

In an embodiment, the connection structure is disposed between the thrust pad 100 and the bolt 1. The thrust pad 100 is in indirect contact with the bolt 1 through the connection structure.

In an embodiment, not part of the invention, as shown in FIG. 2, the connection structure includes a flange pad 2 and a bushing body 3 that are connected to each other. The flange pad 2 is disposed in the first recess 101. The bushing body 3 is disposed in the communication hole 102. The flange pad 2 is clamped between the end cap 11 and the bottom of the first recess 101. A reserved gap A is formed between the bushing body 3 and the carrying member 200. The bolt 1 applies a force to the bushing. After the bolt 1 is tightened, the reserved gap A is eliminated. A lower end face of the bushing is in contact with the carrying member 200 to press the thrust pad 100 and secure the thrust pad 100 on the carrying member 200. In design, the size tolerance of the bushing body 3 is controlled. In an original state, the lower end face of the bushing body 3 and a surface of the carrying member 200 form the gap, that is, the reserved gap A. The size of the reserved gap A is greater than or equal to 0. The size of the reserved gap A is related to the magnitude of the tightening torque of the bolt 1 and is optionally determined by calculation to guarantee sufficient stable connection. The tightening torque of the bolt 1 is designated by adjusting the size of the reserved gap A, guaranteeing a sufficient clamping force and no looseness. Moreover, the bushing body 3 is supported between the bolt 1 and the carrying member 200. The thrust pad 100 is not in direct contact with the bolt 1 so that the thrust pad 100 has little to no plastic deformation, preventing the thrust pad 100 from being crushed. Additionally, the bolt 1 acts directly on the flange pad 2 and the bushing body 3 to be connected to the carrying member 200. The contact area between the flange pad 2 and the thrust pad 100 is relatively increased. Therefore, a greater pre-tightening force of the bolt 1 can be applied, guaranteeing that various components are connected stably without looseness.

Optionally, the flange pad 2 and the bushing body 3 are each provided with a through hole to facilitate the passage of the screw 12. The first recess 101 is a circular recess. The outer diameter of the flange pad 2 is less than the inner diameter of the first recess 101 so that the flange pad 2 is accommodated in the first recess 101.

In an embodiment, the flange pad 2 and the bushing body 3 are integrally structured. For example, a flange bushing may be purchased, which is convenient and reliable. In other embodiments, the flange pad 2 and the bushing body 3 are separably structured. The flange pad 2 and the bushing body 3 may be connected through, for example, bonding, welding or fastener connection. The connection may be set according to needs and is not limited.

### Embodiment two

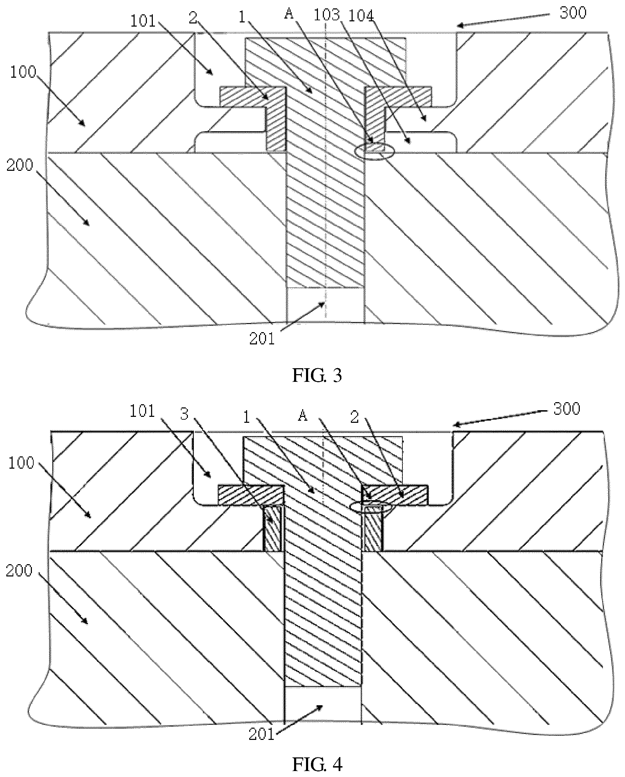

This embodiment provides a fastening apparatus of a thrust pad. The fastening apparatus in this embodiment is the basically same as the structure in embodiment one, with no repetition of identical parts. A difference between this embodiment and the preceding embodiment lies in that, as shown in FIG. 3, the thrust pad 100 further includes a second recess 103. The first recess 101 and the second recess 103 communicate with two sides of the communication hole 102 respectively. The area of the bottom of the first recess 101 and the area of the bottom of the second recess 103 are each greater than the opening area of the communication hole 102. An opening of the second recess 103 faces the carrying member 200. The connection structure includes a flange pad 2 and a bushing body 3. The flange pad 2 is disposed in the first recess 101. The bushing body 3 is disposed in the communication hole 102. The flange pad 2 is clamped between the end cap 11 and the bottom of the first recess 101. A reserved gap A is formed between the carrying member 200 and the bushing body 3.

On the basis of embodiment one, the structure of the thrust pad 100 is modified. The first recess 101 and the second recess 103 form an annular cantilever structure 104 with a certain thickness at the periphery of the communication hole 102. The thrust pad 100 forms a structure having an elastic rebound and may maintain the elastic deformation with a first amplitude. When temperatures fluctuate, the thrust pad 100 has enough elasticity and stability, further improving the firmness of securing the thrust pad 100 on the carrying member 200.

### Embodiment three , not part of the invention

This embodiment provides a fastening apparatus of a thrust pad. The fastening apparatus in this embodiment is the basically same as the structure in embodiment one. The same part is not repeated. A difference between this embodiment and the preceding embodiment lies in that, as shown in FIG. 4, the connection structure includes a flange pad 2 and a bushing body 3. The flange pad 2 is disposed in the first recess 101. The bushing body 3 is disposed in the communication hole 102. The flange pad 2 is clamped between the end cap 11 and the bottom of the first recess 101. One end of the bushing body 3 abuts against the carrying member 200. A reserved gap A is formed between the other end of the bushing body 3 and the flange pad 2.

Optionally, the flange pad 2 may be a metal pad with a certain thickness. An upper surface of the metal pad and a lower surface of the metal pad are in contact with the end cap 11 of the bolt 1 and the thrust pad 100 respectively. The lower surface of the pad 2 and an upper surface of the bushing form the gap. The bolt 1 is not in direct contact with the thrust pad 100 and the bushing body 3 and acts directly on the pad 2. After the gap is consumed, the lower surface of the pad 2 is in contact with the bushing body 3 and presses the thrust pad 100. The existence of the pad 2 may get a greater pre-tightening force of the bolt 1 to be borne, guaranteeing that various components are connected stably without looseness. Moreover, the bushing body 3 is supported between the pad 1 and the carrying member 200, preventing the thrust pad 100 from being crushed.

### Embodiment four

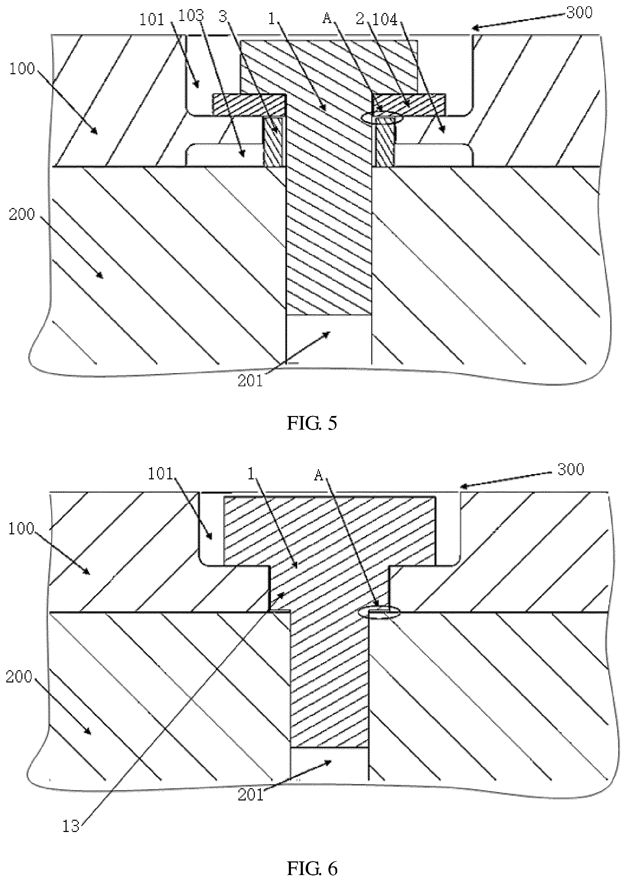

This embodiment provides a fastening apparatus of a thrust pad. The fastening apparatus in this embodiment is the basically same as the structure in embodiment one. The same part is not repeated. A difference between this embodiment and the preceding embodiments lies in that, as shown in FIG. 5, the thrust pad 100 further includes a second recess 103. The first recess 101 and the second recess 103 communicate with two sides of the communication hole 102 respectively. The area of the bottom of the first recess 101 and the area of the bottom of the second recess 103 are each greater than the opening area of the communication hole 102. An opening of the second recess 103 faces the carrying member 200. The connection structure includes a flange pad 2 and a bushing body 3. The flange pad 2 is disposed in the first recess 101. The bushing body 3 is disposed in the communication hole 102. The flange pad 2 is clamped between the end cap 11 and the bottom of the first recess 101. A reserved gap A is formed between the flange pad 2 and the bushing body 3.

On the basis of embodiment three, the structure of the thrust pad 100 is modified. The first recess 101 and the second recess 103 form an annular cantilever structure 104 with a certain thickness at the periphery of the communication hole 102. The thrust pad 100 forms a structure having an elastic rebound and may maintain the elastic deformation with a certain amplitude. When temperature fluctuates, the thrust pad 100 has enough elasticity and stability, further improving the firmness of securing the thrust pad 100 on the carrying member 200.

### Embodiment five , not part of the invention

This embodiment provides a fastening apparatus of a thrust pad. The fastening apparatus in this embodiment is the basically same as the structure in embodiment one. The same part is not repeated. A difference between this embodiment and the preceding embodiments lies in that, as shown in FIG. 6, the connection structure and the bolt 1 are integrally structured. The connection structure is connected to an end of the end cap 11 facing the screw 12. The end cap 11 abuts against the bottom of the first recess 101. The connection structure is disposed in the communication hole 102. A reserved gap A is formed between the carrying member 200 and an end of the connection structure facing away from the end cap 11.

The connection structure and the bolt 1 are integrated to form a non-standard bolt 1. The end cap 11 of the bolt 1 is in direct contact with the thrust pad 100. The connection structure is located between the screw 12 and the end cap 11 to form a shoulder 13 with a plane. An end face of the shoulder 13 and a surface of the carrying member 200 form the reserved gap A. The bolt 1 is tightened. After the gap is consumed, the end face of the shoulder 13 is in contact with the carrying member 200 and presses the thrust pad 100. The shoulder 13 is supported on the surface of the carrying member 200, increasing the contact area between the bolt 1 and the carrying member 200 and thrust pad 100, bearing a greater pre-tightening force of the bolt 1, guaranteeing that various components are connected stably without looseness, and preventing the thrust pad 100 from being crushed.

### Embodiment , not part of the invention

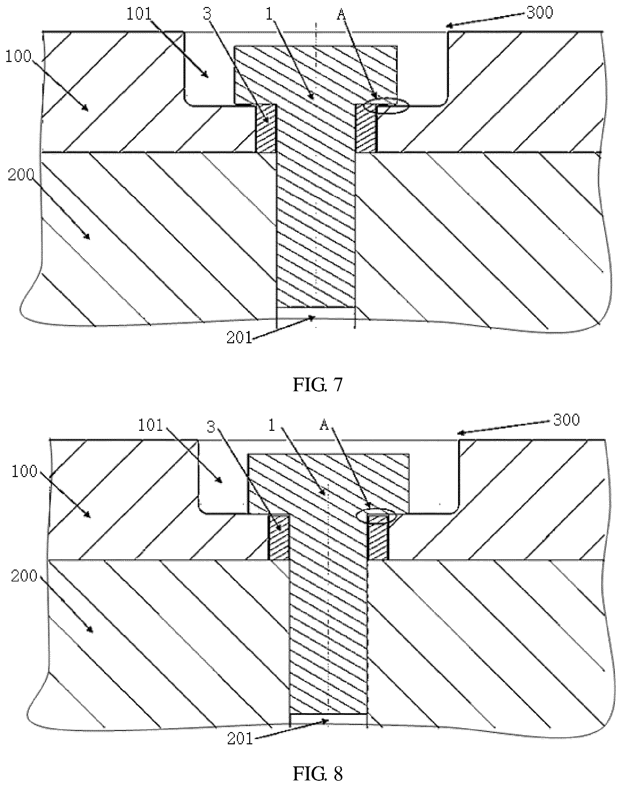

This embodiment provides a fastening apparatus of a thrust pad. The fastening apparatus in this embodiment is the basically same as the structure in embodiment one. The same part is not repeated. A difference between this embodiment and the preceding embodiment lies in that, as shown in FIG. 7, the connection structure includes a bushing body 3. The bushing body 3 passes through the communication hole 102. The screw 12 passes through the bushing body 3. Two ends of the bushing body 3 abut against the end cap 11 and the carrying member 200 respectively. A reserved gap A is formed between the end cap 11 and the bottom of the first recess 101.

An upper surface of the bushing body 3 and a lower surface of the bushing body 3 are in contact with the end cap 11 of the bolt 1 and the carrying member 200 respectively. The height of the bushing body 3 is greater than the depth of the communication hole 102 so that the reserved gap A is formed between a lower end face of the end cap 11 of the bolt 1 and the bottom of the first recess 101 of the thrust pad 100. The bolt 1 is not in direct contact with the thrust pad 100 and acts directly on the bushing body 3. After the gap is consumed, a lower end surface of the bolt 1 is in contact with the thrust pad 100, pressing the thrust pad 100. The tightening torque of the bolt 1 is designated by adjusting the size of the gap, guaranteeing that various components are connected stably without looseness. Moreover, the bushing body 3 is supported between the end cap 11 of the bolt 1 and the carrying member 200 so as to carry part of the tightening torque of the bolt 1, preventing the thrust pad 100 from being crushed.

### Embodiment seven , not part of the invention

This embodiment provides a fastening apparatus of a thrust pad. The fastening apparatus in this embodiment is the basically same as the structure in embodiment one with no repetition of identical parts. A difference between this embodiment and the preceding embodiments lies in that, as shown in FIG. 8, the connection structure includes a bushing body 3. The bushing body 3 passes through the communication hole 102. The screw 12 passes through the bushing body 3. One end of the bushing body 3 abuts against the carrying member 200. The end cap 11 abuts against the bottom of the first recess 101. A reserved gap A is formed between the other end of the bushing body 3 and the end cap 11.

The height of the bushing body 3 is less than the depth of the communication hole 102 so that a lower end face of the end cap 11 of the bolt 1 and an upper surface of the bushing body 3 form the gap. In an original state, the bolt 1 is in direct contact with the thrust pad 100. The bolt 1 is tightened. After the thrust pad 100 is deformed and the gap is consumed, the lower end face of the end cap 11 of the bolt 1 is in contact with the bushing, pressing the thrust pad 100. The tightening torque of the bolt 1 is designated by adjusting the size of the gap, guaranteeing that various components are connected stably without looseness. Moreover, the bushing body 3 is supported between the end cap 11 of the bolt 1 and the carrying member 200 so as to carry part of the tightening torque of the bolt 1, preventing the thrust pad 100 from being crushed.

For the fastening apparatus of a thrust pad and the gearbox provided in the present disclosure, the carrying member is provided with the threaded hole to be connected to the bolt in a threaded manner so as to mount and carry the thrust pad. The bolt presses and secures the thrust pad on the carrying member through the connection structure. The connection structure is used for bearing the tightening torque of the bolt directly, preventing the thrust pad from directly bearing the full tightening torque of the bolt. Therefore, it guarantees that the thrust pad has little to no plastic deformation, preventing the thrust pad from being crushed, improving the tightening torque of the bolt that can be borne by the thrust pad, and compensating for the pre-tightening force of the bolt. The arrangement of the connection structure increases the function area of the bolt. Therefore, a greater pre-tightening force of the bolt can be applied, thereby enabling various components that are connected to each other to be sufficiently stable and firm without looseness, overcoming the shortcoming that the existing mounting of the bolt is easy to loosen. The thrust pad is fully secured on the carrying member, avoiding the failure of the gearbox.

## Claims

1. A gearbox, comprising a thrust pad (100), a carrying member (200), and a fastening apparatus (300), wherein the fastening apparatus (300) is configured to connect the thrust pad (100) to the carrying member (200), the thrust pad (100) is provided with a first recess (101) and a communication hole (102) communicating with the first recess (101), the carrying member (200) is provided with a threaded hole (201), an aperture of the communication hole (102) is greater than an aperture of the threaded hole (201), the fastening apparatus comprises a bolt (1) and a connection structure, an end cap (11) of the bolt (1) is disposed in the first recess (101), a screw (12) of the bolt (1) passes through the connection structure and is threaded into the threaded hole (201), and the connection structure is able to be clamped between the end cap (11) and the carrying member (200), **characterised in that**
the thrust pad (100) further comprises a second recess (103), the first recess (101) and the second recess (103) communicate with two sides of the communication hole (102) respectively, an area of a bottom of the first recess (101) and an area of a bottom of the second recess (103) are each greater than an opening area of the communication hole (102), and an opening of the second recess (103) faces the carrying member (200); and wherein
the connection structure comprises a flange pad (2) and a bushing body (3), the flange pad (2) is disposed in the first recess (101), the bushing body (3) is disposed in the communication hole (102), the flange pad (2) is clamped between the end cap (11) and a bottom of the first recess (101), and a reserved gap (A) is formed between the bushing body (3) and one of the carrying member (200) or the flange pad (2).

2. The gearbox according to claim 1, **characterised in that** the flange pad (2) and the bushing body (3) are integrally structured, and the reserved gap (A) is formed between the bushing body (3) and the carrying member (200),
or
the flange pad (2) and the bushing body (3) are separably structured, and the reserved gap (A) is formed between the bushing body (3) and one of the carrying member (200) or the flange pad (2).

3. The gearbox according to claim 2, **characterised in that** the size of the reserved gap (A) is greater than or equal to 0.

## Patentansprüche

1. Getriebe, das ein Druckkissen (100), ein Tragelement (200) und eine Befestigungsvorrichtung (300) umfasst, wobei die Befestigungsvorrichtung (300) so konfiguriert ist, dass sie das Druckkissen (100) mit dem Tragelement (200) verbindet, wobei das Druckkissen (100) mit einer ersten Ausnehmung (101) und einem Verbindungsloch (102) versehen ist, das mit der ersten Ausnehmung (101) in Verbindung steht, wobei das Tragelement (200) mit einem Gewindeloch (201) versehen ist, wobei eine Öffnung des Verbindungslochs (102) größer ist als eine Öffnung des Gewindelochs (201), wobei die Befestigungsvorrichtung einen Bolzen (1) und eine Verbindungsstruktur umfasst, wobei eine Endkappe (11) des Bolzens (1) in der ersten Ausnehmung (101) angeordnet ist, wobei eine Schraube (12) des Bolzens (1) die Verbindungsstruktur durchdringt und in dem Gewindeloch (201) eingeschraubt ist, und wobei die Verbindungsstruktur zwischen der Endkappe (11) und dem Tragelement (200) einklemmbar ist, **dadurch gekennzeichnet, dass**
das Druckkissen (100) ferner eine zweite Ausnehmung (103) umfasst, wobei die erste Ausnehmung (101) und die zweite Ausnehmung (103) jeweils mit zwei Seiten des Verbindungslochs (102) in Verbindung stehen, wobei eine Fläche eines Bodens der ersten Ausnehmung (101) und eine Fläche eines Bodens der zweiten Ausnehmung (103) jeweils größer sind als eine Öffnungsfläche des Verbindungslochs (102), wobei eine Öffnung der zweiten Ausnehmung (103) dem Tragelement (200) gegenüberliegt; und wobei
die Verbindungsstruktur ein Flanschkissen (2), das in der ersten Ausnehmung (101) angeordnet ist, und einen Buchsenkörper (3) umfasst, der in dem Verbindungsloch (102) angeordnet ist, wobei das Flanschkissen (2) zwischen der Endkappe (11) und einem Boden der ersten Ausnehmung (101) eingeklemmt ist, und wobei ein vorbehaltener Spalt (A) zwischen dem Buchsenkörper (3) und entweder dem Tragelement (200) oder dem Flanschkissen (2) gebildet ist.

2. Getriebe nach Anspruch 1, **dadurch gekennzeichnet, dass** das Flanschkissen (2) und der Buchsenkörper (3) einstückig ausgebildet sind und der vorbehaltene Spalt (A) zwischen dem Buchsenkörper (3) und dem Tragelement (200) gebildet ist,
oder
das Flanschkissen (2) und der Buchsenkörper (3) trennbar ausgebildet sind und der vorbehaltene Spalt (A) zwischen dem Buchsenkörper (3) und entweder dem Tragelement (200) oder dem Flanschkissen (2) gebildet ist.

3. Getriebe nach Anspruch 2, **dadurch gekennzeichnet, dass** die Größe des vorbehaltenen Spalts (A) größer als oder gleich 0 ist.

## Revendications

1. Boîte de vitesses, comprenant un patin de poussée (100), un élément porteur (200) et un dispositif de fixation (300), dans laquelle le dispositif de fixation (300) est configuré pour relier le patin de poussée (100) à l'élément porteur (200), le patin de poussée (100) est pourvu d'un premier évidement (101) et d'un trou de communication (102) communiquant avec le premier évidement (101), l'élément porteur (200) est pourvu d'un trou fileté (201), une aperture du trou de communication (102) est supérieure à une aperture du trou fileté (201), le dispositif de fixation comprend un boulon (1) et une structure de liaison, un capuchon d'extrémité (11) du boulon (1) est disposé dans le premier évidement (101), une vis (12) du boulon (1) passe à travers la structure de liaison et est vissée dans le trou fileté (201), et la structure de liaison est apte à être serrée entre le capuchon d'extrémité (11) et l'élément porteur (200), **caractérisée en ce que**
le patin de poussée (100) comprend en outre un second évidement (103), le premier évidement (101) et le second évidement (103) sont communiqués avec deux côtés du trou de communication (102) respectivement, une aire d'un fond du premier évidement (101) et une aire d'un fond du second évidement (103) sont chacune supérieure à une aire d'ouverture du trou de communication (102), et une ouverture du second évidement (103) fait face à l'élément porteur (200) ; et dans laquelle
la structure de liaison comprend un patin de bride (2) et un corps de douille (3), le patin de bride (2) est disposé dans le premier évidement (101), le corps de douille (3) est disposé dans le trou de communication (102), le patin de bride (2) est serré entre le capuchon d'extrémité (11) et un fond du premier évidement (101), et un jeu réservé (A) est formé entre le corps de douille (3) et l'un de l'élément porteur (200) ou du patin de bride (2).

2. Boîte de vitesses selon la revendication 1, **caractérisée en ce que** le patin de bride (2) et le corps de douille (3) sont structurés intégralement, et le jeu réservé (A) est formé entre le corps de douille (3) et l'élément porteur (200),
ou
le patin de bride (2) et le corps de la douille (3) sont structurés séparément, et le jeu réservé (A) est formé entre le corps de douille (3) et l'un de l'élément porteur (200) et du patin de bride (2).

3. Boîte de vitesses selon la revendication 2, **caractérisée en ce que** la taille du jeu réservé (A) est supérieure ou égale à 0.
